(19) **Europäisches Patentamt**
**European Patent Office**
**Office européen des brevets**

(11) **EP 3 537 285 A1**

(12) **EUROPÄISCHE PATENTANMELDUNG**

(43) Veröffentlichungstag:
**11.09.2019 Patentblatt 2019/37**

(51) Int Cl.:
***G06F 7/58*** *(2006.01)*

(21) Anmeldenummer: **19161060.9**

(22) Anmeldetag: **06.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.03.2018 AT 501902018**
**09.03.2018 AT 502032018**

(71) Anmelder: **AIT Austrian Institute of Technology GmbH**
**1210 Wien (AT)**

(72) Erfinder:
• **LAUDENBACH, Fabian**
**1140 Wien (AT)**
• **HÜBEL, Hannes**
**1180 Wien (AT)**
• **SCHRENK, Bernhard**
**2122 Ulrichskirchen (AT)**
• **PACHER, Christoph**
**1200 Wien (AT)**

(74) Vertreter: **Wildhack & Jellinek**
**Patentanwälte**
**Landstraßer Hauptstraße 50**
**1030 Wien (AT)**

(54) **VERFAHREN ZUR ERZEUGUNG EINES NORMALVERTEILTEN OPTISCHEN ZUFALLSSIGNALS**

(57) Die Erfindung betrifft ein Verfahren zur Erzeugung eines normalverteilten optischen Zufallssignals (S), umfassend die folgenden Schritte:

a) Erstellen eines, insbesondere gepulsten, Lasersignals $(S_1)$,

b) gleichzeitiges additives und subtraktives Überlagern des Lasersignals $(S_1)$ mit einem aus Vakuumrauschen erstellten Signal,

c) Messung der Leistung der derart durch Überlagerung entstandenen Mischsignale und Bilden der Differenz der Leistungsmessergebnisse als analoges elektrisches Zufallssignal $(S_2, S_{2a}, S_{2b})$,

d) vorzugsweise Abtasten des elektrischen Zufallssignals $(S_2, S_{2a}, S_{2b})$ und Halten eines in diesem zu einem Zeitpunkt auftretenden Werts analogen Zufallssignalwerts $(S_2, S_{2a}, S_{2b})$, oder Tiefpassfiltern des elektrischen Zufallssignals $(S_2, S_{2a}, S_{2b})$ und Erhalten eines analogen Zufallssignalwerts $(S_2, S_{2a}, S_{2b})$,

e) Modulieren des Lasersignals $(S_1)$ oder eines von einem weiteren Laser erstellten Lasersignals mit dem analogen elektrischen Zufallssignalwert und/oder Zuführen des analogen elektrischen Zufallssignalwerts sowie eines Lasersignals $(S_6)$ oder des in Schritt a) erstellten Lasersignals $(S_1)$ zu zumindest einem elektrooptischen Modulator (7, 7a, 7b) und

f) Zurverfügungstellen eines durch Modulation mittels des elektrooptischen Modulators (7a, 7b) erstellten optischen normalverteilten Zufallssignals (S).

Fig. 1

**Beschreibung**

Die Erfindung betrifft ein Verfahren zur Erzeugung eines normalverteilten, optischen Zufallssignals, das insbesondere für die Erstellung von kryptographischen Schlüsseln geeignet ist.

Aus dem Stand der Technik sind unterschiedliche Methoden zur Erstellung von Zufallszahlen bekannt, mit denen es auch möglich ist, normalverteilte Zufallszahlen zu erzeugen. Insbesondere ist es von Vorteil, optische Signale zu erzeugen, wobei die deren Quadraturen des jeweiligen elektrischen Feldes normalverteilt sind. Hintergrund für die Verwendung eines solchen Signals in der Quantenkryptographie ist insbesondere, dass basierend auf diesen Eigenschaften ein erhöhtes Maß von Sicherheit bei gleichzeitig hoher Datenrate erzielt werden kann. Dieses erhöhte Maß von Sicherheit lässt sich nach dem aktuellen Stand der Forschung nur bei kontinuierlicher, normalverteilter Modulation der Information erzeugen, da in einem solchen Fall verlässlich abgeschätzt werden kann, wie hoch das bei einem eventuell vorhandenen Angreifer vorhandene Ausmaß an gewonnener Information ist. Da aus dem Stand der Technik keine Vorgehensweisen bekannt sind, die eine tatsächliche kontinuierliche Normalverteilung ermöglichen, sondern lediglich Verfahren bekannt sind, die eine stufenförmige, diskrete Annäherung an eine Normalverteilung zeigen, ist es bei solchen Verfahren auch für einen Angreifer möglich, mehr Information aus dem übertragenen Signal zu gewinnen bzw. kann im Rahmen des Nachweises der dem Angreifer zur Verfügung stehenden maximalen Information aufgrund des Korrekturterms nur eine geringere Datensicherheit nachgewiesen werden, siehe: Paul Jouguet, Sebastien Kunz-Jacques, Eleni Diamanti, and Anthony Leverrier, Phys. Rev. A 86, 032309.

Aufgabe der Erfindung ist es, ein normalverteiltes optisches Zufallssignal zur Verfügung zu stellen. Die Erfindung löst diese Aufgabe mit den folgenden Schritten:

a) Erstellen eines, insbesondere gepulsten, Lasersignals,

b) gleichzeitiges additives und subtraktives Überlagern des Lasersignals mit einem aus Vakuumrauschen erstellten Signal,

c) Messung der Leistung der derart durch Überlagerung entstandenen Mischsignale und Bilden der Differenz der Leistungsmessergebnisse als analoges elektrisches Zufallssignal,

d) vorzugsweise Abtasten des elektrischen Zufallssignals und Halten eines in diesem zu einem Zeitpunkt auftretenden Werts analogen Zufallssignalwerts, oder Tiefpassfiltern des elektrischen Zufallssignals und Erhalten eines analogen Zufallssignalwerts,

e) Modulieren des Lasersignals oder eines von einem weiteren Laser erstellten Lasersignals mit dem analogen elektrischen Zufallssignalwert und/oder Zuführen des analogen elektrischen Zufallssignalwerts sowie eines Lasersignals oder des in Schritt a) erstellten Lasersignals zu zumindest einem elektrooptischen Modulator und

f) Zurverfügungstellen eines durch Modulation mittels des elektrooptischen Modulators erstellten optischen normalverteilten Zufallssignals.

Der besondere Vorteil an diesem Vorgehen liegt darin, dass zur Erstellung des Zufallssignals keine Digital-Analog-Konversion vorgenommen werden braucht und damit auch alle Maßnahmen entfallen können, mit denen eine notwendigerweise diskrete stufenweise Normalverteilung der Zufallssignalwerte erstellt werden muss. Vielmehr kann eine optimale analoge Normalverteilung erreicht werden.

Zur Erzielung einer quantenkryptographischen Übertragungssicherheit kann vorgesehen sein, dass das optischen normalverteilte Zufallssignal oder das Lasersignal derart abgeschwächt wird, dass die Anzahl der Photonen pro Puls oder Abtastung des optischen normalverteilten Zufallssignals geringer ist als 100, insbesondere geringer als 10.

Eine Anpassung des zu übertragenden optischen normalverteilten Zufallssignals kann vorgesehen sein, dass das modulierte optische normalverteilte analoge Zufallssignal

- verstärkt oder gedämpft wird, und/oder
- einer vorgegebenen Frequenzfilterung unterzogen wird, insbesondere bandpassgefiltert oder hinsichtlich einzelner Frequenzen beschnitten wird.

Zur Erstellung von mehreren Zufallssignalwerten während desselben Zeitintervalls sowie zur Erstellung von optischen normalverteilten Zufallssignalen, die eine Vielzahl von Zufallssignalwerten gleichzeitig enthalten, kann vorgesehen sein, dass die Schritte a) bis d) mehrfach, insbesondere zweifach, gleichzeitig ausgeführt werden und zumindest zwei der so erhaltenen analogen elektrischen Zufallssignalwerte in Schritt e) gemeinsam zur Erstellung des optischen normalverteilten Zufallssignals mittels elektrooptischer Modulation zugeführt werden.

Zur Erstellung von mehreren Zufallssignalwerten während desselben Zeitintervalls sowie zur Erstellung von optischen normalverteilten Zufallssignalen, die eine Anzahl von zwei Zufallssignalwerten gleichzeitig enthalten, kann vorgesehen sein:

- Zuführen des ersten analogen elektrischen Zufallssignalwerts sowie eines Lasersignals zu einem ersten elektrooptischen Modulator und Erstellen eines ersten optischen normalverteilten Zufallssignals,
- Zuführen des zweiten analogen elektrischen Zufallssignalwerts sowie eines, insbesondere desselben, Lasersignals zu einem zweiten elektrooptischen Modulator und Erstellen eines zweiten optischen normalverteilten Zufallssignals,

- Mischen des ersten und zweiten optischen normalverteilten Zufallssignals zur Erstellung des optischen normalverteilten Gesamt-Zufallssignals, wobei eines der beiden optischen normalverteilten Zufallssignale mit einem vorgegebenen Phasenverschub, insbesondere von 90°, versehen wird.

Zur getakteten sequentiellen Erstellung und Übertragung eines optischen normalverteilten Zufallssignals kann vorgesehen sein,

- dass die Schritte d) bis f) in zeitlich aufeinander folgenden Intervallen jeweils neu vorgenommen werden und/oder
- dass in zeitlich aufeinander folgenden Intervallen jeweils einzelne Zufallssignalwerte ermittelt werden, die für das jeweilige Intervall dem Modulator zugeführt werden und nach dem Ende des jeweiligen Intervalls durch Abtastung ein neuer Zufallssignalwert ermittelt und für die Modulation herangezogen wird.

Eine bevorzugte Weiterbildung der erfindungsgemäßen Vorgehensweise, die lediglich mit einem einzigen balanced receiver auskommt, sieht vor, dass innerhalb eines Intervalls ein optisches normalverteiltes Zufallssignal basierend auf einer Anzahl von Zufallssignalwerten erstellt wird, die zu unterschiedlichen Zeitpunkten innerhalb des jeweils vorangehenden Intervalls durch Abtastung ermittelt wurden.

Um zu vermeiden, dass ein potentieller Angreifer Informationen über die konkrete Umschaltung erlangen kann, kann vorgesehen sein, dass das dem jeweiligen Modulator zugeführte Lasersignal in Zeitabschnitten, während denen der analoge elektrische Zufallssignalwert seinen Wert ändert, insbesondere während der Zeitabschnitte, zu denen die Abtast-Halte-Schaltungen aktiviert werden, unterbrochen oder gedämpft wird, insbesondere mit einer Dämpfung von mindestens 30 dB.

Um den Inhalt der erstellten Zufallssignalwerte, gegebenenfalls für einen späteren Signalabgleich zur Verfügung zu haben, kann vorgesehen sein, dass die in Schritt d) ermittelten Zufallssignalwerte analog-digitalkonvertiert werden und derart ein Digitalsignal erstellt und für die weitere Verarbeitung, insbesondere für einen Schlüsselabgleich, zur Verfügung gehalten wird.

Ein Verfahren, mit dem vorteilhaft ein Schlüsselaustausch vorgenommen werden kann, sieht vor:

- Erstellen eines optischen normalverteilten Zufallssignals sowie des senderseitigen Digitalsignals nach Anspruch 9, und Abschwächen dieses Signals nach Anspruch 2, in einem Sender,
- Übermitteln des optischen normalverteilten Zufallssignals von einem Sender an einen Empfänger über einen ersten Kommunikationskanal,
- Messen bzw Ermitteln des optischen normalverteilten Zufallssignals und darauf basierend Erstellen eines empfängerseitigen Digitalsignals,

- Austausch von auf den Datensignalen basierenden Daten zur Erstellung eines beidseitig identen Schlüssels im Sender und Empfänger über einen weiteren, gegebenenfalls offenen, Kommunikationskanal.

Weiters betrifft die Erfindung eine Vorrichtung zur Erzeugung eines normalverteilten optischen Zufallssignals, umfassend:

a) einen Laser zum Erstellen eines, insbesondere gepulsten, Lasersignals,
b) einen Strahlteiler und Mischer mit einem abgedunkelten Eingang und einem Eingang, dem das Lasersignal zugeführt ist, zum gleichzeitigen additiven und subtraktiven Überlagern des Lasersignals mit einem aus Vakuumrauschen erstellten Signal,
c) einen balanced reveiver zur Messung der Leistung der derart durch Überlagerung entstandenen Mischsignale und zum Bilden der Differenz der Leistungsmessergebnisse als analoges elektrisches Zufallssignal,
d) insbesondere einer Abtast-Halte-Schaltung

- zum Abtasten des elektrischen Zufallssignals und Halten eines in diesem zu einem Zeitpunkt auftretenden Werts analogen Zufallssignalwerts und zum Erstellen eines analogen Zufallssignalwerts,

oder einen Tiefpassfilter zum Filtern des elektrischen Zufallssignals und Erhalten eines analogen Zufallssignalwerts,
e) einen elektrooptischen Modulator zum Modulieren des Lasersignals oder eines von einem weiteren Laser erstellten Lasersignals mit dem analogen elektrischen Zufallssignalwert.

Zur Erzielung einer quantenkryptographischen Übertragungssicherheit kann vorgesehen sein, einen dem Modulator nachgeschalteten Abschwächer, der dazu ausgebildet ist, das optische normalverteilte Zufallssignal oder das Lasersignal derart abzuschwächen, dass die Anzahl der Photonen pro Puls oder Abtastung des optischen normalverteilten Zufallssignals geringer ist als 100, insbesondere geringer als 10.

Zur Erstellung von mehreren Zufallssignalwerten während desselben Zeitintervalls sowie zur Erstellung von optischen normalverteilten Zufallssignalen, die eine Vielzahl von Zufahlssignalwerten gleichzeitig enthalten, kann vorgesehen sein, dass jeweils zwei oder mehrere Kombinationen von hintereinandergeschalteten Strahlteilern, balanced receivers und Abtast-Halte-Schaltungen vorgesehen sind, an deren Ausgängen jeweils separat analoge elektrische Zufallssignalwerte anliegen und dass alle diese analogen elektrischen Zufallssignalwerte einem gemeinsamen elektrooptischen Modulation zur Erstellung eines gemeinsamen oder mehrerer normalverteilter optischer Zufallssignale zugeführt sind.

Zur Erstellung eines quadraturmodulierten Ausgangssignals kann vorgesehen sein,

- dass dem ersten elektrooptischen Modulator ein Lasersignal sowie der erste analoge elektrische Zufallssignalwert zugeführt sind, und
- wobei dem zweiten elektrooptischen Modulator ein Lasersignal sowie der zweite analoge elektrische Zufallssignalwert zugeführt sind,
- wobei einem der beiden elektrooptischen Modulatoren ein Verzögerungsglied zur Verzögerung um einen vorgegebenen Phasenwinkel, insbesondere von 90° nachgeschaltet ist,
- wobei ein Strahlteiler und/oder Mischer vorgesehen ist, dem der Ausgang des Verzögerungsglieds sowie der Ausgang des jeweils anderen elektrooptischen Modulators unverzögert zugeführt sind, und
- der Ausgang des Strahlteilers und/oder Mischers, ein diesem nachgeschaltetes Abschwächelement den Ausgang der Vorrichtung bildet.

Zur Erstellung von mehreren Zufallssignalwerten während desselben Zeitintervalls sowie zur Erstellung von optischen normalverteilten Zufallssignalen, die eine Vielzahl von Zufahlssignalwerten gleichzeitig enthalten, kann vorgesehen sein, einen von einer Steuerschaltung geschalteten analogen Demultiplexer, dessen Eingang das Zufallssignal zugeführt ist, und der eine Anzahl von Ausgängen aufweist, wobei der Demultiplexer von der Steuerschaltung derart gesteuert ist, dass er zu vorgegebenen Zeitpunkten innerhalb einzelner periodisch wiederkehrender Zeitintervalle das bei ihm anliegende Zufallssignal an einem seiner Ausgänge zur Verfügung stellt,
wobei den Ausgängen des Demultiplexers zumindest eine von der Steuerschaltung geschaltete Abtast-Halte-Schaltung nachgeschaltet ist, die von der Steuerschaltung derart angesteuert ist, dass sie bei Vorliegen des vom Demultiplexer durchgeschalteten Zufallssignals an ihrem Eingang dieses an ihren Ausgang übernimmt und für die Modulation zur Verfügung hält.

Um zu vermeiden, dass ein potentieller Angreifer Informationen über die konkrete Umschaltung erlangen kann, kann vorgesehen sein, dass ein AM-Pulse Carver vorgesehen ist, der dazu ausgebildet ist, ein bei ihm einlangendes Lasersignal zu unterdrücken oder an seinen Ausgang durchzulassen, und der von der Steuerschaltung derart geschaltet ist, dass der AM-Pulse Carver das dem jeweiligen Modulator jeweils zugeführte Lasersignal in Zeitabschnitten, in denen der analoge elektrische Zufallssignalwert seinen Wert ändert, insbesondere während der Zeitabschnitte, zu denen die Abtast-Halte-Schaltungen aktiviert sind, unterbrochen oder gedämpft wird, insbesondere mit einer Dämpfung von mindestens 30 dB.

Nach der Übermittlung eines optischen normalverteilten Zufallssignals von einem Sender zu einem Empfänger kann der Empfänger das betreffende Signal dekodieren und die einzelnen Zufallszahlen aus dem Signal rekonstruieren. Dabei treten gerade bei den in der Quantenkryptografie verwendeten, stark abgeschwächten Signalen höhere Fehlerraten auf, die im Anschluss mit aus dem Stand der Technik bekannten Verfahren korrigiert werden können. Im Rahmen eines solchen Korrektur-Verfahrens können Sender und Empfänger unterschiedliche, vom jeweiligen Schlüssel abgeleitete Datenwerte über eine gewöhnliche, nicht sichere Leitung übertragen und derart letztendlich sicherstellen, dass sowohl Sender als auch Empfänger jeweils über denselben Schlüssel verfügen.

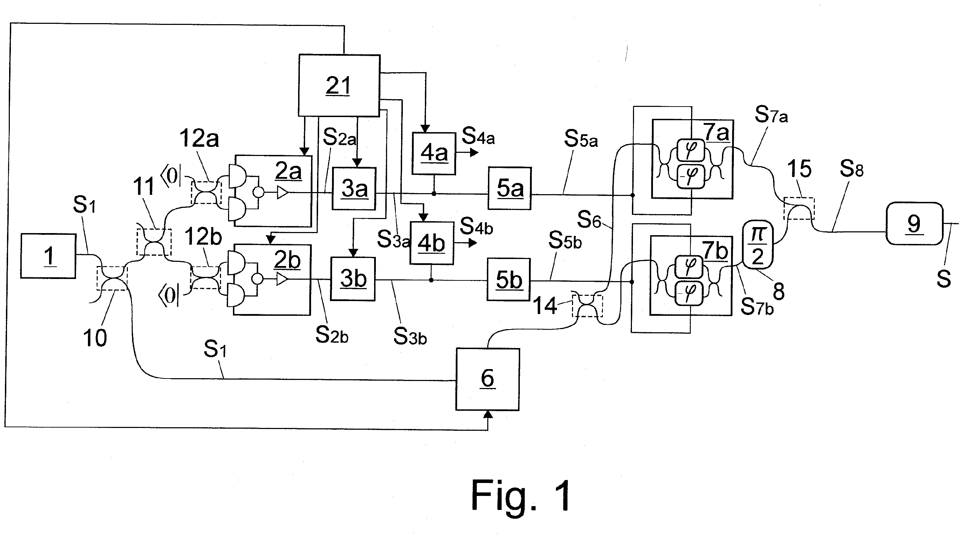

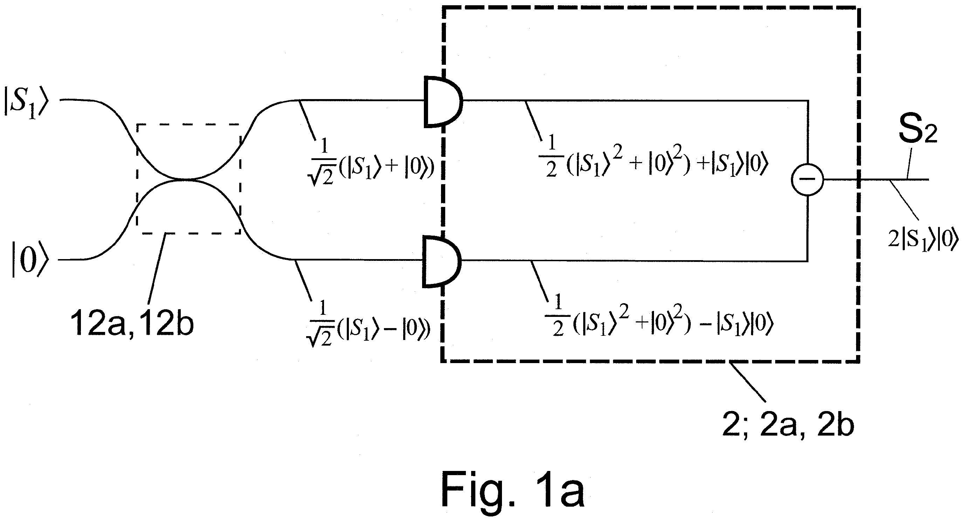

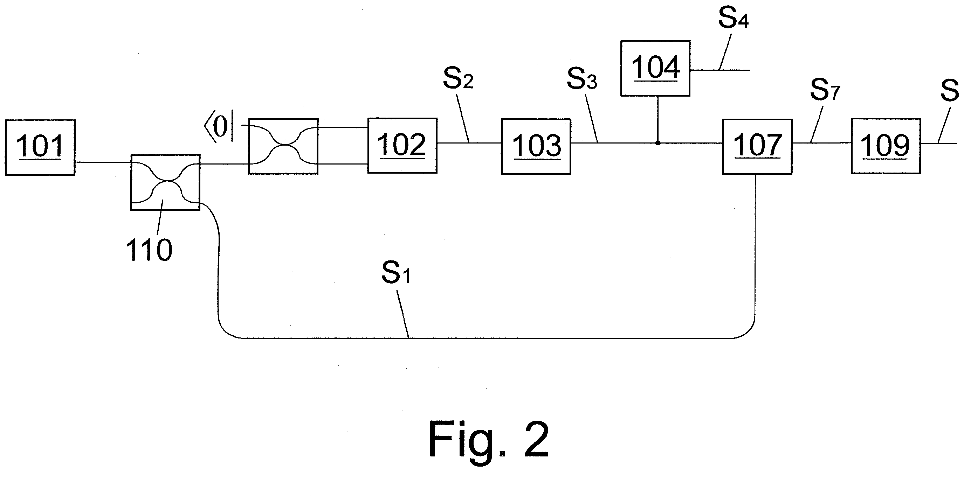

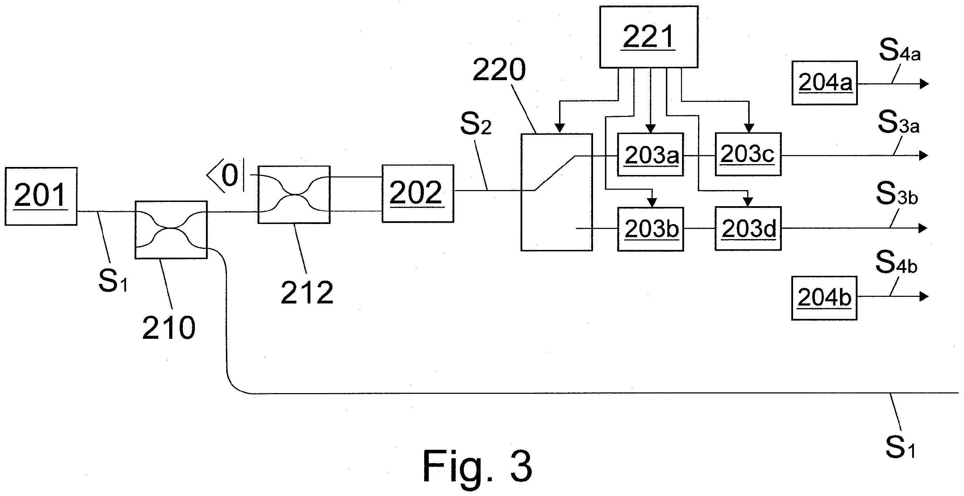

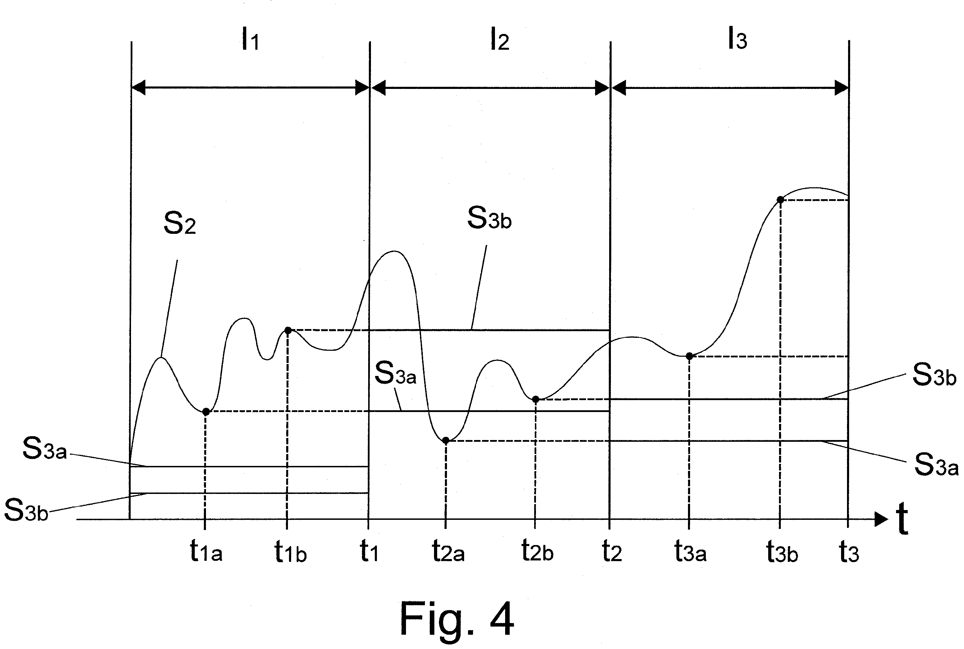

In **Fig. 1** ist eine erste Ausführungsform einer erfindungsgemäßen Sendevorrichtung zur Erstellung eines normalverteilten optischen Signals dargestellt. **Fig. 2** zeigt eine vereinfachte Sendevorrichtung gemäß einer zweiten Ausführungsform der Erfindung. **Fig. 3** zeigt einen Teil einer Ausführungsvariante der in **Fig. 1** dargestellten Ausführungsform. **Fig. 4** zeigt schematisch die Erstellung der einzelnen Zufallssignalwerte für die in **Fig. 3** dargestellte Ausführungsvariante der Erfindung.

In **Fig. 1** ist ein Laser 1 dargestellt, der an seinem Ausgang ein insbesondere gepulstes Lasersignal $S_1$ abgibt. Dieses Lasersignal $S_1$ wird einem ersten Strahlteiler 10 zugeführt.

Im vorliegenden Ausführungsbeispiel werden jeweils Strahlteiler 10, 11, 12a, 12b, 14, 15 mit zwei Eingängen und zwei Ausgängen verwendet. Bei diesen Strahlteilern 10, 11, 12a, 12b, 14, 15 werden die beiden an den jeweiligen Eingängen anliegenden optischen Signale miteinander überlagert und an den beiden Ausgängen zur Verfügung gehalten.

Die einzelnen Strahlteiler (**Fig. 1a**) fungieren auch als Mischer, wenn an ihren beiden Eingängen jeweils Signale anliegen, und/oder als Strahlteiler, wenn die an ihren beiden Ausgängen anliegenden Signale weiter verwendet werden. Die beiden an ihren Eingängen anliegenden optischen Signale werden hinsichtlich ihrer Feldstärke sowohl additiv als auch subtraktiv überlagert, sodass an einem der Ausgänge ein zur Summe der Eingangssignale proportionales Ausgangssignal und am anderen Ausgang ein zur Differenz der Eingangssignale proportionales Ausgangssignal anliegt.

Das Lasersignal $S_1$ wird über den ersten Strahlteiler 10 auf zwei unterschiedliche optische Leitungen geteilt. Der zweite Eingang des ersten Strahlteilers 10 bleibt dabei offen, sodass an den beiden Ausgängen des ersten Strahlteilers 10 jeweils ein dem Lasersignal $S_1$ entsprechendes, optisches Signal anliegt.

Ein an einem Ausgang des Strahlteilers 10 anliegendes optisches Signal ist an den Eingang eines zweiten Strahlteilers 11 geführt, an dessen anderen Eingang kein optisches Signal anliegt.
Die beiden Ausgänge des zweiten Strahlteilers 11 sind wiederum jeweils an einen Eingang eines von zwei Strahlteilern 12a, 12b angeschlossen. Die jeweils anderen Eingänge dieser Strahlteiler 12a, 12b sind abgedunkelt, dh kein Licht gelangt über diese beiden Eingänge in den jeweiligen Strahlteiler 12a, 12b bzw zu den Ausgängen der beiden Strahlteiler 12a, 12b. Diese Abdunkelung der Eingänge der Strahlteiler 12a, 12b hat zur Wirkung, dass an den jeweiligen Eingängen normalverteiltes optisches Vakuumrauschen auftritt.

In weiterer Folge wird zur Verstärkung des relativ schwachen Vakuum-Rauschsignals eine Signalmultiplikation des Lasersignals mit dem Vakuum-Rauschsignal durch Hintereinanderschaltung eines Strahlteilers und eines balanced receiver 2a, 2b vorgenommen. Der Strahlteiler 12a überlagert die elektromagnetischen Felder des optischen Lasersignals und des Vakuum-Rauschsignals, wobei das Vakuum-Rauschsignal um 180 Grad phasenverschoben bzw invertiert wird, sodass an einem Ausgang des Strahlteilers 12a, 12b ein Signal anliegt, dessen Signalamplitude der Differenz der beiden eingehenden Signale entspricht, während das Signal am jeweils anderen Ausgang des Strahlteilers 12a, 12b der Summe der Amplituden der einlangenden Signale entspricht. Die am Ausgang des Strahlteilers anliegenden optischen Signale werden dem balanced receiver 2a, 2b zugeführt, der an seinen optischen Eingängen jeweils eine Fotodiode aufweist, deren Ausgangssignal etwa dem Quadrat der ermittelten Amplituden der einlangenden Signale entspricht. Die beiden Fotodioden sind in Serie geschalten, wobei die beiden Enden der Serienschaltungen an eine vorgegebene Spannungsquelle angeschlossen sind. Der Anschluss, an dem die beiden Fotodioden miteinander verbunden sind, weist ein Signal mit einem Spannungswert auf, der proportional zum Produkt der Amplituden der beiden einlangenden Signale ist (**Fig. 1a**), sodass am Ausgang ein elektrisches Signal zur Verfügung steht, das in seiner statistischen Varianz etwa dem Lasersignal $S_1$ entspricht, dessen zeitliche Signalform jedoch der des Vakuum-Rauschsignals entspricht.

Zusammenfassend wird also am Ausgang des ersten balanced receiver 2a ein elektrisches Signal $S_{2a}$ erhalten, das dem Vakuum-Rauschsignal am Eingang des ersten Strahlteilers 12a entspricht und am Ausgang des zweiten balanced receiver 2b wird ein elektrisches Signal $S_{2b}$ erhalten, das dem Vakuum-Rauschsignal am Eingang des zweiten Strahlteilers 12b entspricht. Die beiden Vakuum-Rauschsignale an den jeweiligen Eingängen der Strahlteiler 12a, 12b sind miteinander nicht korreliert und stellen voneinander unabhängige normalverteilte Zufallszahlen dar.

Die beiden von den balanced receivers 2a, 2b erstellten elektrischen, normalverteilten Zufallssignale werden jeweils einem analogen Abtast-Halte-Schaltung 3a, 3b zugeordnet, das zu vorgegebenen, insbesondere periodischen, Zeitpunkten das Ausgangssignal des jeweiligen balanced receivers 2a, 2b am jeweiligen Ausgang der Abtast-Halte-Schaltung 3a, 3b übernimmt. Die konkrete Taktung der beiden Abtast-Halte-Schaltung 3a, 3b wird dabei von einer externen Steuereinheit 21 vorgenommen, die insgesamt taktgesteuert ist. Die Taktfrequenz beträgt dabei etwa 100 MHz bis 10 GHz.

Der jeweilige Ausgang der beiden Abtast-Halte-Schaltungen 3a, 3b wird jeweils einem Analog-Digital-Konverter 4a, 4b zugeführt, der an seinem jeweiligen Ausgang jeweils ein Digitalsignal $S_{4a}$ bzw. $S_{4b}$ zur Verfügung hält, das zur weiteren Verarbeitung an die Steuereinheit 21 übermittelt wird. Insbesondere kann im Rahmen des getakteten Vorgehens durch die Steuereinheit 21 vorgesehen sein, dass nach der Übernahme der Zufallssignale $S_{2a}$, $S_{2b}$ in die jeweilige Abtast-Halte-Schaltung 3a, 3b nach dem Ende der jeweiligen Taktperiode erneut eine Analog-Digital-Konversion vorgenommen wird und nach Beendigung der Analog-Digital-Konversion neuerlich Werte von den Abtast-Halte-Schaltungen 3a, 3b übernommen werden usw.

Die so erstellten, zeitlich stückweise konstanten, am Ausgang der Abtast-Halte-Schaltungen 3a, 3b vorliegenden, elektrischen Signale werden jeweils einer Verstärkereinheit bzw. Abschwächereinheit 5a, 5b zugeführt, wodurch verstärkte bzw. abgeschwächte Signale $S_{5a}$, $S_{5b}$ erhalten werden. Das erste verstärkte Signal $S_{5a}$ wird einem ersten Modulator 7a als Modulationssignal zugeführt, das zweite verstärkte Signal $S_{5b}$ wird einem zweiten Modulator 7b als Modulationssignal zugeführt.

Weiters wird den beiden Modulatoren 7a, 7b jeweils ein optisches Signal $S_6$ zugeführt, das von einem AM-Pulse Carver 6 erstellt wurde. Dabei handelt es sich um einen Amplituden Modulator, der das einlangende Lasersignal $S_1$ während eines Intervalls $I_1$, $I_2$, $I_3$, innerhalb dessen an den Abtast-Halte-Schaltungen 3a, 3b jeweils konstante Zufallssignalwerte anliegen nahezu ungehindert passieren lässt, während er das einlangende Lasersignal $S_1$ während des Zeitraums der Umschaltung der Zufallssignalwerte zwischen den Intervallen $I_1$, $I_2$ unterdrückt oder dämpft, insbesondere mit einer Abschwächung von zumindest 30 dB. Dies hat den Vorteil, dass ein potentieller Angreifer keine Informationen über die konkrete Umschaltung erlangen kann.

Der AM Pulse Carver 6 wandelt also ein kontinuierliches Lasersignal in eine Sequenz zeitlich getrennter Laserpulse um. Ein AM-Pulse Carver kann insbesondere dann zum Einsatz kommen, wenn das optische Signal $S_6$ von einem Dauerstrich- (oder Continuous-wave) - Laser erzeugt wird. Wird hingegen das optische Signal $S_6$ von einem gepulsten Laser erzeugt, dann erübrigt sich der AM-Pulse Carver 6.

Anstelle des Lasersignals $S_1$ kann für die Erstellung des optischen Signals $S_6$ auch ein beliebiges anderes Lasersignal verwendet werden. In diesem Fall ist eine weitere Laserquelle vor dem AM-Pulse Carver 6 vorzusehen. Für den Fall, dass ein gepulster Laser verwendet wird, kann dieser direkt an den Modulator angeschlossen werden.

Im vorliegenden Ausführungsbeispiel wird das vom AM-Pulse Carver 6 erstellte Signal bzw alternativ das gepulste Lasersignal an einen Strahlteiler 14 geleitet, dessen beide Ausgänge an die beiden Modulatoren 7a, 7b als zu modulierende optische Signale angeschlossen sind. Die Modulatoren erstellen dabei jeweils ein optisches quadraturmoduliertes Signal $S_{7a}$, $S_{7b}$ das die optisches Frequenz des Lasersignals $S_6$ aufweist und dessen jeweilige Quadratur jeweils dem verstärkten Zufallssignalwert $S_{5a}$, $S_{5b}$ entspricht.

Die beiden optischen Ausgänge der Modulatoren 7a, 7b sind jeweils an die Eingänge eines Strahlteilers 15 angeschlossen, wobei zwischen dem Ausgang des Modulators 7b und dem Strahlteiler 15 ein Verzögerungsglied 8 vorgesehen ist, das für das modulierte Lasersignal $S_{7b}$ eine Phasenverzögerung von 90° bzw. $\frac{\pi}{2}$ bewirkt. Das vom ersten Modulator 7a modulierte Lasersignal $S_{7a}$ sowie das vom zweiten Modulator 7b erstellte und durch das Verzögerungsglied 8 verzögerte Signal werden im Strahlteiler 15 überlagert einem Abschwächer 9 zugeführt. Am Ausgang des Abschwächers 9 wird ein optisch moduliertes Zufallssignal S zur Verfügung gehalten.

In **Fig. 2** ist eine zweite einfachere Ausführungsform der Erfindung näher dargestellt. Diese umfasst einen Laser 101, der dem Laser der ersten Ausführungsform der Erfindung entspricht und gepulstes Laserlicht $S_1$ abgibt. Dieses wird in einem ersten Strahlteiler 110 auf zwei Signalteile aufgeteilt, wobei ein Teil einem Eingang eines zweiten Strahlteilers 112 zugeführt wird. Der zweite Eingang des zweiten Strahlteilers 112 wird abgedunkelt, sodass an diesem Eingang ein Vakuumrauschen anliegt.

Wie auch bei der ersten Ausführungsform der Erfindung liegen am Ausgang des zweiten Strahlteilers 112 jeweils zwei Signale an, die eine additive bzw subtraktive Überlagerung der beiden Eingangssignale aufweisen. Durch die konkrete Ausbildung des balanced receiver 102 wird ein Zufallssignal erhalten, das proportional zum Produkt der beiden Singale ist. Der balanced receiver 102 enthält zu diesem Zweck zwei Photodioden, wobei jeweils einer der Photodioden das durch additive Überlagerung des Vakuum-Rauschsignals und des Lasersignals erstellte Signal zugeführt ist und wobei der jeweils anderen Photodioden das durch subtraktive Überlagerung des Vakuumrauschsignals und des Lasersignals erstellte Signal zugeführt ist. Die beiden Photodioden erstellen ein zur Leistung proportionales elektrisches Strom- oder Spannungssignal, dh dieses Signal ist proportional zum Quadrat der Feldstärke der beiden am Eingang des balanced receiver 102 anliegenden Überlagerungssignale. Die beiden von den Photodioden erstellten Signale werden voneinander abgezogen, sodass ein Zufallssignal erhalten wird, das proportional zum Produkt des Vakuumrauschsignals und des Lasersignals ist.

Dieses Zufallssignal $S_2$ wird einer Abtast-Halte-Schaltung 103 (Sample-Hold-Schaltung), die zu vorgegebenen, insbesondere periodisch wiederkehrenden, Zeitpunkten aktiviert wird, zugeführt. Dabei wird der jeweilige zum Aktivierungszeitpunkt vorherrschende Signalwert als Spannungswert am Ausgang der Abtast-Halte-Schaltung 103 übernommen und liegt dort bis zum jeweils nächsten Aktivierungszeitpunkt als Zufallssignalwert $S_3$ an.

Der analoge Zufallssignalwert $S_3$ wird für jedes Intervall einem Analog-Digital-Konverter 104 zugeführt, der einen dem analogen Zufallssignalwert $S_3$ entsprechenden Digitalwert erstellt und gegebenenfalls abspeichert oder sonst zur Verfügung hält.

Innerhalb des Intervalls bis zum nächsten Aktivierungszeitpunkt wird der Zufallssignalwert am Ausgang der Abtast-Halte-Schaltung 103 gehalten und auch zur Ansteuerung eines elektrooptischen Modulators 107 genutzt. Dieser Modulator 107 erhält als optisches Eingangssignal den zweiten Signalteil des Lasersignals, der am zweiten Ausgang des ersten Strahlteilers 110 anliegt.

Durch die Modulation wird am Ausgang des Modulators 107 ein Lasersignal erhalten, dessen Quadratur entsprechend dem Zufallssignalwert moduliert ist. Das Zufallssignal wird gegebenenfalls von einem Abschwächer 109 abgeschwächt.

Das so erstellte Signal wird vorzugsweise an einen Empfänger übermittelt, der das Signal decodiert und verarbeitet. Wie auch bei den zuvor gezeigten Ausführungsformen der Erfindung ist es möglich, durch Austausch und Übermittlung von Daten, die aus dem empfangenen Signal abgeleitet wurden und von Daten, die aus den ermittelten analog-digital-codierten Daten abgeleitet wurden, einen gemeinsamen Schlüssel für die künftige Übertragung von verschlüsselten Daten zu erstellen.

**Fig. 3** zeigt eine Variante der ersten Ausführungsform der Erfindung, mit der eine vereinfachte Generierung von Zufallszahlen einhergeht. Anders als die erste Ausführungsform der Erfindung verfügt diese Variante nur über einen einzigen balanced receiver 202, an dessen Ausgang ein analoger Auswahlschalter 220 angeschlossen ist. Dieser wird von einer Steuerschaltung 221 zu einzelnen vorgegebenen, insbesondere periodisch wiederkehrenden, Zeitpunkten $t_{1a}$, $t_{1b}$, $t_{2a}$, $t_{2b}$, $t_{3a}$, $t_{3b}$ umgeschaltet, sodass das Zufallssignal $S_2$ jeweils nur an einen der beiden Ausgänge weitergeleitet wird (**Fig. 4**). Den beiden Ausgängen der Auswahlschaltung 220 sind jeweils zwei hintereinander geschaltete Abtast-Halte-Schaltungen 203a, 203c; 203b 203d nachgeschaltet.

Zu einem ersten Zeitpunkt $t_{1a}$, $t_{2a}$, $t_{3a}$ innerhalb des jeweiligen Intervalls $I_1$, $I_2$, $I_3$, an dem der Ausgang der Auswahlschaltung 220 der ersten Abtast-Halte-Schaltung 203a zugeführt ist, wird diese von der Steuerschaltung 221 zur Abtastung veranlasst und hält den abgetasteten Wert des Zufallssignals $S_2$, in **Fig. 4** durch eine punktierte Linie dargestellt, an ihrem Ausgang zur Verfügung und leitet diesen an den Eingang der ihr nachgeschalteten Abtast-Halte-Schaltung 203c weiter.

Zu einem zweiten Zeitpunkt $t_{1b}$, $t_{2b}$, $t_{3b}$ inner-

halb des Intervalls $I_1$, $I_2$, $I_3$, an dem der Ausgang der Auswahlschaltung 220 der zweiten Abtast-Halte-Schaltung 203b zugeführt ist, wird diese von der Steuerschaltung 221 zur Abtastung veranlasst und hält den abgetasteten Wert des Zufallssignals $S_2$, in **Fig. 4** durch eine punktierte Linie dargestellt, an ihrem Ausgang zur Verfügung und leitet diesen an den Eingang der ihr nachgeschalteten Abtast-Halte-Schaltung 203d weiter. Am Ende $t_1$, $t_2$, $t_3$ des Intervalls $I_1$, $I_2$, $I_3$ werden die beiden nachgeschalteten Abtast-Halte-Schaltungen 203c, 203d von der Steuerschaltung 221 zur Abtastung veranlasst, sodass diese für das jeweils nachfolgende Intervall die ermittelten Zufallssignalwerte an ihrem Ausgang zur Verfügung stellen.

Neben dem hier gezeigten Schaltschema können auch noch andere Möglichkeiten der Verschaltung vorgegeben werden. Insbesondere könnten auch die beiden Abtast-Halte-Schaltungen 203c, 203d weggelassen werden, wobei sich gegebenenfalls die Abtastgeschwindigkeit verringern würde.

Die so für die weitere Verarbeitung benötigten Zufallssignalwerte $S_{3a}$, $S_{3b}$ liegen am Ausgang der Abtast-Halte-Schaltungen 203c, 203d an. Basierend auf den Zufallswerten erstellen die beiden Analog-Digital-Konverter 204a, 204b jeweils Digitalwerte, die für die weitere Verarbeitung, insbesondere für einen nachfolgenden Schlüsselaustausch zur Verfügung gehalten werden.

Die weitere Verarbeitung der Zufallssignalwerte erfolgt wie bei der in **Fig. 1** dargestellten Ausführungsform der Erfindung, dh jeder der Zufallssignalwerte $S_{3a}$, $S_{3b}$ wird jeweils einem Modulator als Modulationssignal zugeführt, das zur Modulation eines Lasersignals $S_1$ verwendet wird. Die beiden so erstellten modulierten optischen Signale werden, gegebenenfalls nach Vornahme einer Phasenverschiebung überlagert, gegebenenfalls abgeschwächt und übertragen.

Bei allen dargestellten Ausführungsbeispielen der Erfindung kann das optische normalverteilte Zufallssignal an einen Empfänger über einen ersten Kommunikationskanal, insbesondere eine Glasfaserleitung, übermittelt werden. Das empfangene optische Singal wird vom Empfänger empfangen und gemessen. Dabei wird das optische normalverteilte Zufallssignal rekonstruiert und digitalisiert, sodass ein empfängerseitiges Digitalsignal erhalten wird. Dabei ist davon auszugehen, dass die Datenübertragung aufgrund der vorgenommenen Abschwächung nicht fehlerfrei erfolgt ist, sondern typischerweise Fehlerraten im Bereich von 20% bis 45% auftreten.

Zur Kompensation dieser Ferhlerraten sind aus dem Stand der Technik unterschiedliche Vorgehensweisen bekannt. Zur Kompensation wird typischerweise eine fehlerarme, jedoch nicht notwendigerweise abhörsichere, Datenleitung verwendet. Im Rahmen der Fehlerkompensation werden Daten, die auf dem von den Analog-Digital-Konvertern erstellten Zufallssignalen sowie auf den empfangenen digitalisierten Messdaten basieren, übermittelt und zur Erstellung eines beidseitig identen Schlüssels im Sender und Empfänger verwendet. Solche Korrekturverfahren, wie beispielsweise Low-Density-Parity-Check-Codes, sind aus dem Stand der Technik, beispielsweise aus Richardson, Urbanke: Modern Coding Theory, Cambridge University Press, 2008, Tomlinson et al: Error-Correction Coding and Decoding, Springer Open, 2017 bekannt.

Bei allen Ausführungsformen kann anstelle einer Abtast-Halte-Schaltung 3a, 3b auch ein Tiefpassfilter verwendet werden. Im Rahmen der Tiefpassfilterung wird dabei sichergestellt, dass sich die Werte am Ausgang des Tiefpassfilters nicht wesentlich über ein Übertragungsintervall ändern, sodass am Ausgang des Tiefpassfilters ein im Wesentlichen zeitlich konstanter Zufallssignalwert anliegt.

**Patentansprüche**

1. Verfahren zur Erzeugung eines normalverteilten optischen Zufallssignals (S), umfassend die folgenden Schritte:

   a) Erstellen eines, insbesondere gepulsten, Lasersignals ($S_1$),
   b) gleichzeitiges additives und subtraktives Überlagern des Lasersignals ($S_1$) mit einem aus Vakuumrauschen erstellten Signal,
   c) Messung der Leistung der derart durch Überlagerung entstandenen Mischsignale und Bilden der Differenz der Leistungsmessergebnisse als analoges elektrisches Zufallssignal ($S_2$, $S_{2a}$, $S_{2b}$),
   d) vorzugsweise Abtasten des elektrischen Zufallssignals ($S_2$, $S_{2a}$, $S_{2b}$) und Halten eines in diesem zu einem Zeitpunkt auftretenden Werts analogen Zufallssignalwerts ($S_2$, $S_{2a}$, $S_{2b}$), oder Tiefpassfiltern des elektrischen Zufallssignals ($S_2$, $S_{2a}$, $S_{2b}$) und Erhalten eines analogen Zufallssignalwerts ($S_2$, $S_{2a}$, $S_{2b}$),
   e) Modulieren des Lasersignals ($S_1$) oder eines von einem weiteren Laser erstellten Lasersignals mit dem analogen elektrischen Zufallssignalwert und/oder Zuführen des analogen elektrischen Zufallssignalwerts sowie eines Lasersignals ($S_6$) oder des in Schritt a) erstellten Lasersignals ($S_1$) zu zumindest einem elektrooptischen Modulator (7, 7a, 7b) und
   f) Zurverfügungstellen eines durch Modulation mittels des elektrooptischen Modulators (7a, 7b) erstellten optischen normalverteilten Zufallssignals (S).

2. Verfahren nach Anspruch 1, **dadurch gekennzeichnet, dass** das optischen normalverteilte Zufallssignal ($S_8$) oder das Lasersignal ($S_6$) derart abgeschwächt wird, dass die Anzahl der Photonen pro Puls oder Abtastung des optischen normalverteilten Zufallssignals geringer ist als 100, insbesondere geringer als 10.

3. Verfahren nach einem der vorangehenden Ansprüche, **dadurch gekennzeichnet, dass** das modulierte optische normalverteilte analoge Zufallssignal

   - verstärkt oder gedämpft wird, und/oder
   - einer vorgegebenen Frequenzfilterung unterzogen wird, insbesondere bandpassgefiltert oder hinsichtlich einzelner Frequenzen beschnitten wird.

4. Verfahren nach einem der vorangehenden Ansprüche, **dadurch gekennzeichnet, dass** die Schritte a) bis d) mehrfach, insbesondere zweifach, gleichzeitig ausgeführt werden und zumindest zwei der so erhaltenen analogen elektrischen Zufallssignalwerte in Schritt e) gemeinsam zur Erstellung des optischen normalverteilten Zufallssignals mittels elektrooptischer Modulation zugeführt werden.

5. Verfahren nach einem der vorangehenden Ansprüche zur Erstellung eines optischen normalverteilten Zufallssignals mit zumindest zwei analogen elektrischen Zufallssignalen, umfassend die folgenden Schritte:

   - Zuführen des ersten analogen elektrischen Zufallssignalwerts ($S_{3a}$; $S_{5a}$) sowie eines Lasersignals (6) zu einem ersten elektrooptischen Modulator (7a) und Erstellen eines ersten optischen normalverteilten Zufallssignals ($S_{7a}$),
   - Zuführen des zweiten analogen elektrischen Zufallssignalwerts ($S_{3b}$; $S_{5b}$) sowie eines, insbesondere desselben, Lasersignals (6) zu einem zweiten elektrooptischen Modulator (7b) und Erstellen eines zweiten optischen normalverteilten Zufallssignals ($S_{7b}$),
   - Mischen des ersten und zweiten optischen normalverteilten Zufallssignals ($S_{7a}$, $S_{7b}$) zur Erstellung des optischen normalverteilten Gesamt-Zufallssignals (S), wobei eines der beiden optischen normalverteilten Zufallssignale mit einem vorgegebenen Phasenverschub, insbesondere von 90°, versehen wird.

6. Verfahren nach einem der vorangehenden Ansprüche, **dadurch gekennzeichnet,**

   - **dass** die Schritte d) bis f) in zeitlich aufeinander folgenden Intervallen jeweils neu vorgenommen werden und/oder
   - **dass** in zeitlich aufeinander folgenden Intervallen jeweils einzelne Zufallssignalwerte ($S_3$; $S_5$) ermittelt werden, die für das jeweilige Intervall dem Modulator (7; 7a, 7b) zugeführt werden und nach dem Ende des jeweiligen Intervalls durch Abtastung ein neuer Zufallssignalwert ($S_3$; $S_5$) ermittelt und für die Modulation herangezogen wird.

7. Verfahren nach einem der vorangehenden Ansprüche, **dadurch gekennzeichnet, dass** innerhalb eines Intervalls ein optisches normalverteiltes Zufallssignal (S) basierend auf einer Anzahl von Zufallssignalwerten ($S_3$; $S_5$) erstellt wird, die zu unterschiedlichen Zeitpunkten innerhalb des jeweils vorangehenden Intervalls durch Abtastung ermittelt wurden.

8. Verfahren nach einem der vorangehenden Ansprüche, **dadurch gekennzeichnet, dass** das dem jeweiligen Modulator (7; 7a, 7b) zugeführte Lasersignal (6) in Zeitabschnitten, während denen der analoge elektrische Zufallssignalwert ($S_{3a}$; $S_{5a}$) seinen Wert ändert, insbesondere während der Zeitabschnitte, zu denen die Abtast-Halte-Schaltungen aktiviert werden, unterbrochen oder gedämpft wird, insbesondere mit einer Dämpfung von mindestens 30 dB.

9. Verfahren nach einem der vorangehenden Ansprüche, **dadurch gekennzeichnet, dass** die in Schritt d) ermittelten Zufallssignalwerte analog-digital-konvertiert werden und derart ein Digitalsignal ($S_{4a}$, $S_{4b}$) erstellt und für die weitere Verarbeitung, insbesondere für einen Schlüsselabgleich, zur Verfügung gehalten wird.

10. Verfahren nach Anspruch 9, zum Austausch von Schlüsseln zwischen einem Sender und einem Empfänger, umfassend die Schritte

   - Erstellen eines optischen normalverteilten Zufallssignals sowie des senderseitigen Digitalsignals nach Anspruch 9, und Abschwächen dieses Signals nach Anspruch 2, in einem Sender,
   - Übermitteln des optischen normalverteilten Zufallssignals von einem Sender an einen Empfänger über einen ersten Kommunikationskanal,
   - Messen bzw Ermitteln des optischen normalverteilten Zufallssignals und darauf basierend Erstellen eines empfängerseitigen Digitalsignals,
   - Austausch von auf den Datensignalen basierenden Daten zur Erstellung eines beidseitig identen Schlüssels im Sender und Empfänger über einen weiteren, gegebenenfalls offenen, Kommunikationskanal.

11. Vorrichtung zur Erzeugung eines normalverteilten optischen Zufallssignals (S), umfassend:

   a) einen Laser (1) zum Erstellen eines, insbe-

sondere gepulsten, Lasersignals ($S_1$),

b) einen Strahlteiler und Mischer (12; 12a, 12b) mit einem abgedunkelten Eingang und einem Eingang, dem das Lasersignal zugeführt ist, zum gleichzeitigen additiven und subtraktiven Überlagern des Lasersignals ($S_1$) mit einem aus Vakuumrauschen erstellten Signal,

c) einen balanced reveiver (2) zur Messung der Leistung der derart durch Überlagerung entstandenen Mischsignale und zum Bilden der Differenz der Leistungsmessergebnisse als analoges elektrisches Zufallssignal ($S_2$, $S_{2a}$, $S_{2b}$),

d) insbesondere einer Abtast-Halte-Schaltung (3)

- zum Abtasten des elektrischen Zufallssignals ($S_2$, $S_{2a}$, $S_{2b}$) und Halten eines in diesem zu einem Zeitpunkt auftretenden Werts analogen Zufallssignalwerts ($S_2$, $S_{2a}$, $S_{2b}$) und zum Erstellen eines analogen Zufallssignalwerts ($S_2$, $S_{2a}$, $S_{2b}$),

oder einen Tiefpassfilter zum Filtern des elektrischen Zufallssignals ($S_2$, $S_{2a}$, $S_{2b}$) und Erhalten eines analogen Zufallssignalwerts ($S_2$, $S_{2a}$, $S_{2b}$),

e) einen elektrooptischen Modulator (7, 7a, 7b) zum Modulieren des Lasersignals ($S_1$) oder eines von einem weiteren Laser erstellten Lasersignals mit dem analogen elektrischen Zufallssignalwert.

12. Vorrichtung nach Anspruch 11, **gekennzeichnet durch** einen dem Modulator nachgeschalteten Abschwächer (9), der dazu ausgebildet ist, das optische normalverteilte Zufallssignal ($S_8$) oder das Lasersignal ($S_6$) derart abzuschwächen, dass die Anzahl der Photonen pro Hüls oder Abtastung des optischen normalverteilten Zufallssignals geringer ist als 100, insbesondere geringer als 10.

13. Vorrichtung nach einem der Ansprüche 11 oder 12, **dadurch gekennzeichnet, dass** jeweils zwei oder mehrere Kombinationen von hintereinandergeschalteten Strahlteilern (12; 12a, 12b), balanced receivers (2a, 2b) und Abtast-Halte-Schaltungen (3a, 3b) vorgesehen sind, an deren Ausgängen jeweils separat analoge elektrische Zufallssignalwerte anliegen und dass alle diese analogen elektrischen Zufallssignalwerte einem gemeinsamen elektrooptischen Modulation zur Erstellung eines gemeinsamen oder mehrerer normalverteilter optischer Zufallssignale (S) zugeführt sind.

14. Vorrichtung nach einem der Ansprüche 11 bis 13 zur Erstellung eines optischen normalverteilten Zufallssignals basierend auf zwei analogen elektrischen Zufallssignalwerten, mit jeweils zwei elektrooptischen Modulatoren (7a, 7b),

- wobei dem ersten elektrooptischen Modulator (7a) ein Lasersignal sowie der erste analoge elektrische Zufallssignalwert ($S_{3a}$; $S_{5a}$) zugeführt sind, und
- wobei dem zweiten elektrooptischen Modulator (7b) ein Lasersignal sowie der zweite analoge elektrische Zufallssignalwert ($S_{3a}$; $S_{5a}$) zugeführt sind,
- wobei einem der beiden elektrooptischen Modulatoren (7b) ein Verzögerungsglied (8) zur Verzögerung um einen vorgegebenen Phasenwinkel, insbesondere von 90° nachgeschaltet ist,
- wobei ein Strahlteiler und/oder Mischer (15) vorgesehen ist, dem der Ausgang des Verzögerungsglieds sowie der Ausgang des jeweils anderen elektrooptischen Modulators (7a) unverzögert zugeführt sind, und
- der Ausgang des Strahlteilers und/oder Mischers (15), ein diesem nachgeschaltetes Abschwächelement (9) den Ausgang der Vorrichtung bildet.

15. Vorrichtung nach einem der Ansprüche 11 bis 14, **gekennzeichnet durch** einen von einer Steuerschaltung (221) geschalteten analogen Demultiplexer (220), dessen Eingang das Zufallssignal ($S_2$) zugeführt ist, und der eine Anzahl von Ausgängen aufweist, wobei der Demultiplexer (220) von der Steuerschaltung (221) derart gesteuert ist, dass er zu vorgegebenen Zeitpunkten innerhalb einzelner periodisch wiederkehrender Zeitintervalle das bei ihm anliegende Zufallssignal ($S_2$) an einem seiner Ausgänge zur Verfügung stellt,

wobei den Ausgängen des Demultiplexers (220) zumindest eine von der Steuerschaltung (221) geschaltete Abtast-Halte-Schaltung (203a, 203b) nachgeschaltet ist, die von der Steuerschaltung (221) derart angesteuert ist, dass sie bei Vorliegen des vom Demultiplexer durchgeschalteten Zufallssignals ($S_2$) an ihrem Eingang dieses an ihren Ausgang übernimmt und für die Modulation zur Verfügung hält.

16. Vorrichtung nach einem der Ansprüche 11 bis 15, **dadurch gekennzeichnet, dass** ein AM-Pulse Carver (6) vorgesehen ist, der dazu ausgebildet ist, ein bei ihm einlangendes Lasersignal zu unterdrücken oder an seinen Ausgang durchzulassen, und der von der Steuerschaltung (221) derart geschaltet ist, dass der AM-Pulse Carver (6) das dem jeweiligen Modulator (7; 7a, 7b) jeweils zugeführte Lasersignal (6) in Zeitabschnitten, in denen der analoge elektrische Zufallssignalwert ($S_{3a}$; $S_{5a}$) seinen Wert ändert, insbesondere während der Zeitabschnitte, zu denen die Abtast-Halte-Schaltungen (3; 3a, 3b) aktiviert sind,

**EP 3 537 285 A1**

unterbrochen oder gedämpft wird, insbesondere mit einer Dämpfung von mindestens 30 dB.

Fig. 1

$|S_1\rangle$

$|0\rangle$

12a,12b

$\frac{1}{\sqrt{2}}(|S_1\rangle + |0\rangle)$

$\frac{1}{\sqrt{2}}(|S_1\rangle - |0\rangle)$

$\frac{1}{2}(|S_1\rangle^2 + |0\rangle^2) + |S_1\rangle|0\rangle$

$\frac{1}{2}(|S_1\rangle^2 + |0\rangle^2) - |S_1\rangle|0\rangle$

$S_2$

$2|S_1\rangle|0\rangle$

2; 2a, 2b

Fig. 1a

EP 3 537 285 A1

Fig. 2

EP 3 537 285 A1

Fig. 3

Fig. 4

EP 3 537 285 A1

**Europäisches Patentamt**
**European Patent Office**
**Office européen des brevets**

# EUROPÄISCHER RECHERCHENBERICHT

Nummer der Anmeldung

EP 19 16 1060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 284 024 B1 (TRIFONOV ALEXEI [US] ET AL) 16. Oktober 2007 (2007-10-16) * Spalte 3, Zeile 33 - Spalte 7, Zeile 45 * ----- | 1-16 | INV. G06F7/58 |
| X | CN 107 612 686 A (UNIV CENTRAL SOUTH) 19. Januar 2018 (2018-01-19) * Absatz [0063] - Absatz [0078] * ----- | 1-16 | |
| A | YICHENG SHI ET AL: "Random numbers from vacuum fluctuations", ARXIV.ORG, CORNELL UNIVERSITY LIBRARY, 201 OLIN LIBRARY CORNELL UNIVERSITY ITHACA, NY 14853, 26. Februar 2016 (2016-02-26), XP080686156, * Kapitel 2; Abbildung 1 * ----- | 1-16 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 19. Juli 2019 | Tenbieg, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 1060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2019

| Im Recherchenbericht angeführtes Patentdokument | Datum der Veröffentlichung | Mitglied(er) der Patentfamilie | Datum der Veröffentlichung |
|---|---|---|---|
| US 7284024 B1 | 16-10-2007 | KEINE | |
| CN 107612686 A | 19-01-2018 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PAUL JOUGUET ; SEBASTIEN KUNZ-JACQUES ; ELENI DIAMANTI ; ANTHONY LEVERRIER.** *Phys. Rev.,* vol. A 86, 032309

- **RICHARDSON.** Urbanke: Modern Coding Theory. Cambridge University Press, 2008
- **TOMLINSON et al.** Error-Correction Coding and Decoding. Springer Open, 2017